# EUROPÄISCHE PATENTSCHRIFT

(11) **EP 2 429 878 B1**
(45) Veröffentlichungstag und Bekanntmachung des Hinweises auf die Patenterteilung: **22.01.2014**
(21) Anmeldenummer: 10725376.7
(22) Anmeldetag: 03.05.2010
(51) Int. Cl.: B62D 17/00, B60G 3/26, B60G 21/00

(54) **VORRICHTUNG ZUM VERSTELLEN VON STURZ UND/ODER SPUR**
METHOD FOR ADJUSTING CAMBER AND/OR TRACK
DISPOSITIF DE RÉGLAGE DU CARROSSAGE ET/OU DE LA VOIE

(30) Priorität: 15.05.2009 DE 102009021477
(43) Veröffentlichungstag der Anmeldung: 21.03.2012
(73) Patentinhaber: Audi AG, 85045 Ingolstadt (DE)
(72) Erfinder: MICHEL, Wilfried, 93339 Riedenburg (DE); MÜLLER, Hugo, 86701 Rohrenfels-Ballersdorf (DE); MEITINGER, Karl-Heinz, 81667 München (DE); KOSSIRA, Christoph, 85053 Ingolstadt (DE); SCHMID, Wolfgang, 85354 Freising (DE)
(74) Vertreter: Asch, Konrad
(86) Internationale Anmeldenummer: PCT/EP2010/002678
(87) Internationale Veröffentlichungsnummer: WO 2010/130342

(56) Entgegenhaltungen:
- WO-A1-98/16418
- WO-A1-2008/052531
- DE-A1-102008 011 367

## Beschreibung

Die Erfindung betrifft eine Vorrichtung zum Verstellen von Sturz und/oder Spur der Räder von Radaufhängungen, insbesondere für Kraftfahrzeuge, gemäß dem Oberbegriff des Patentanspruches 1.

Hinsichtlich Hinterachslenkungen eines (Straßen-)Fahrzeuges gibt es verschiedene technische Lösungen. In der Regel wird die Spurstange geschoben oder aber auch in ihrer Länge verändert. Weiterhin gibt es Ausführungen mit geteiltem Radträger, wie es beispielsweise in der US 20020036385 oder in der FR 2884795 beschrieben ist. Dabei werden die den Sturz und/oder die Spur der Räder bestimmenden Drehteile oder Stellzylinder über Stelltriebe (zum Beispiel einem Stirnzahnradtrieb) und Elektromotoren in den beiden Drehrichtungen gegensinnig oder gleichsinnig verstellt.

Aus der DE 10 2008 011 367 A1 ist eine gattungsgemäße Vorrichtung zum Verstellen von Sturz und/oder Spur der Räder von Radaufhängungen bekannt. Diese weist einen Radträger auf, an dem das jeweilige Fahrzeugrad drehbar gelagert ist. Der Radträger ist in ein, das radaufnehmende Trägerteil, ein mit der Radaufhängung verbundenes Führungsteil und in zwei dazwischen angeordnete und zueinander, sowie zum Trägerteil und zum Führungsteil verdrehbare Drehteile unterteilt. Aus der WO 98/16418 A1 ist eine weitere Vorrichtung zum Verstellen von Sturz und/oder Spur der Fahrzeugräder bekannt, die grundsätzlich nach dem gleichen Wirkprinzip funktioniert.

Bei dem gattungsgemäßen mehrteiligen, verstellbaren Radträger werden durch entsprechendes Verdrehen der beiden schräg geschnittenen Zylinder die Vorspur und/oder der Sturz geändert. Aufgrund der Tatsache, dass die Gelenkwelle zentral durch die Verstellzylinder geführt werden muss, kann der Verstellantrieb hierfür nur radial von außen erfolgen.

Bei Auslegung der erforderlichen Motorleistung und Berechnung der Getriebestufe ist zum einen die Verzahnung im Hinblick auf Festigkeit problematisch. Zum anderen kann die notwendige Übersetzung nicht durch eine einfache Ritzel/Zahnradstufe erreicht werden. Zudem lassen es die Raumverhältnisse nicht zu, den Antrieb weder in axialer Maßkette noch in radialer Maßkette beliebig zu placieren.

Aufgabe der Erfindung ist es, eine Vorrichtung der gattungsgemäßen Art zu schaffen, die baulich und fertigungstechnisch günstig und mit Hinblick auf die bei Radaufhängungen auftretenden Betriebsbedingungen besonders robust ausgeführt ist.

Diese Aufgabe wird erfindungsgemäß mit den Merkmalen des Patentanspruches 1 gelöst. Vorteilhafte Weiterbildungen der Erfindung beschreiben die Unteransprüche.

Erfindungsgemäß wird vorgeschlagen, dass der Stelltrieb für zumindest einen der Drehteile oder Stellzylinder, bevorzugt für beide Drehteile, als Planetenradgetriebe ausgeführt ist. Ein derartiges Getriebe ermöglicht aufgrund vermehrter Zahneingriffe eine robuste Momentenübertragung und -abstützung und kann baulich vorteilhaft in den Radträger integriert werden.

Insbesondere kann der Antrieb als Planetengetriebe in Kombination mit einem Scheibenläufermotor ausgeführt werden. Der Scheibenläufermotor besitzt ein überaus großes Motormoment bei minimaler Ständerwicklung. Die Festigkeit der Zahnräder stellt keinerlei Probleme mehr da.

Bevorzugt kann das elektromotorisch angetriebene Hohlrad des Planetenradgetriebes drehbar am Trägerteil und/oder am Führungsteil gelagert sein, wobei die innenliegenden Planetenräder auf Lagerbolzen des Trägerteiles und/oder des Führungsteiles gelagert sind und mit dem Hohlrad und einem auf dem Stellzylinder angeordneten Sonnenrad in Eingriff sind. Über das im Durchmesser relativ große Hohlrad können Antriebsmomente bei günstig wählbaren Übersetzungsverhältnissen sicher eingeleitet werden. Zudem können die Stellzylinder fertigungstechnisch einfach ausgeführt sein und den Freigang einer zentral durch die Stellzylinder verlaufenden Gelenkwelle problemlos ermöglichen. Durch Verwendung eines Hohlrades, großer Planetenräder (vier Planetenräder) und großem Zahnrad am Verstellzylinder ergibt sich eine weitaus größere Überdeckung als mit einem einzigen Zahneingriff mit kleinem Ritzel (nur ein Ritzel).

Das Hohlrad des Planetenradgetriebes ist bevorzugt über ein zweireihiges Wälzlager fliegend am Trägerteil und/oder am Führungsteil gelagert, woraus insbesondere eine gewichtsgünstige Konstruktion resultiert.

Des Weiteren kann das Hohlrad unmittelbar über einen elektrischen Scheibenläufermotor angetrieben sein, dessen Scheibenrotor am Außenumfang des Hohlrades und dessen Ständerwicklungen am Trägerteil und/oder Führungsteil befestigt sind. Der Scheibenläufermotor ermöglicht bei minimalen, gewichtsgünstigen Ständerwicklungen die Einleitung hoher Antriebsmomente in beiden Drehrichtungen und eine unproblematische, ringförmige Anordnung am Trägerteil und/oder Führungsteil des Radträgers und gegebenenfalls innerhalb der Radfelge.

Bei einer an sich bekannten Radaufhängung, bei der an dem Trägerteil und an dem Führungsteil jeweils zwei achsparallel abragende und diametral gegenüberliegende Ausleger bzw. Kardangabel vorgesehen sind, an denen ein kardanisch angelenkter Stützring gelagert ist, wird in vorteilhafter Weiterbildung der Erfindung vorgeschlagen, dass die Planetenräder baulich und räumlich besonders platzsparend jeweils in den Freiräumen zwischen den Auslegern angeordnet sind. Insbesondere können dabei zur Erzielung vermehrter Zahneingriffe jeweils vier Planetenräder umfangssymmetrisch verteilt zwischen den Auslegern angeordnet sein. Die vier Taschen bzw. Freiräume der Kardangabel bieten sich zur Unterbringung der Planetenräder an. Die Folge davon ist, dass der Antrieb äußerst kompakt gehalten werden kann.

Zur Abstützung von gegebenenfalls an den Stellzylindern wirkenden, aus den statischen und dynamischen Radlasten resultierenden Reaktionsmomenten kann an dem Scheibenrotor zwischen den Ständerwicklungen eine elektromagnetische Bremse vorgesehen sein, die im stromlosen Zustand den Scheibenrotor festbremst (zum Beispiel federbelastet) und die bei einer elektrischen Ansteuerung des Scheibenläufermotors elektromagnetisch geöffnet wird.

Schließlich kann in vorteilhafter Weise zwischen dem Scheibenläufermotor und dem korrespondierenden Stellzylinder eine das Planetenradgetriebe kapselnde Abdeckkappe vorgesehen sein, die das Planetenradgetriebe gegen schädliche Umwelteinflüsse wie Spritzwasser, Schmutz, etc. schützt. Die Abdeckkappe kann an dem ringförmigen Gehäuse des Scheibenläufermotors festgelegt sein und den korrespondierenden Stellzylinder jeweils unter Zwischenschaltung einer Ringdichtung abdichten.

Ein Ausführungsbeispiel der Erfindung ist im Folgenden mit weiteren Einzelheiten näher erläutert. Die schematische Zeichnung zeigt in:
- **Fig. 1**: eine Radaufhängung für Kraftfahrzeuge mit einem mehrteiligen, an Radführungselementen angelenkten Radträger, dessen Rad über zwei verdrehbare Stellzylinder verstellbar ist, wobei die Stellzylinder jeweils mittels eines Stelltriebes und eines Elektromotors verdrehbar sind;
- **Fig. 2**: den Radträger der **Fig. 1** mit dem lenkerseitigen Führungsteil, dem radseitigen Trägerteil und den beiden Stellzylinder, die jeweils über ein Planetenradgetriebe und einem elektrischen Scheibenläufermotor verstellbar sind; und
- **Fig. 3**: einen Querschnitt durch den Radträger gemäß Linie III - III der **Fig. 2****.**

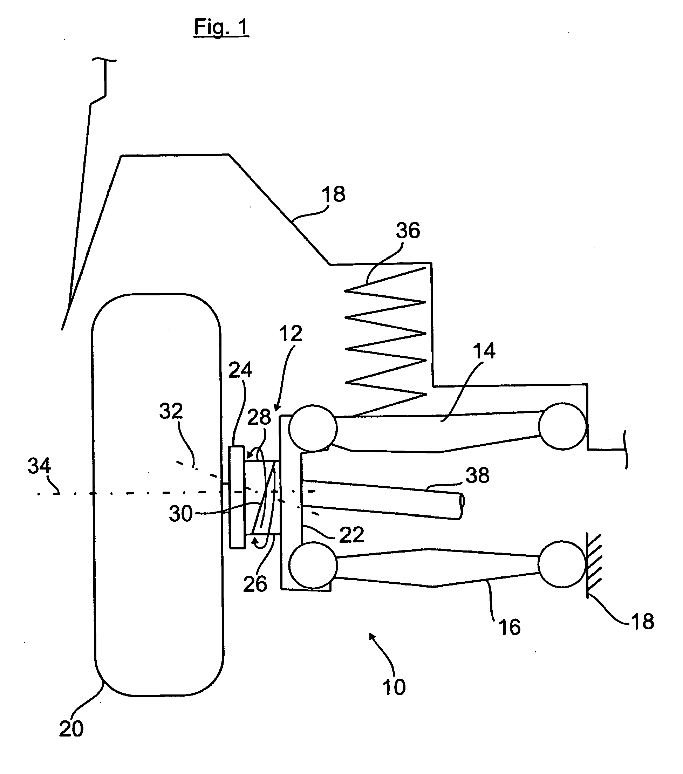

In der **Fig. 1** ist eine Radaufhängung 10 für Kraftfahrzeuge grob schematisch dargestellt, bei der ein Radträger 12 über Querlenker 14, 16 als Radführungselemente an einem nur angedeuteten Aufbau 18 angelenkt ist.

Der das Rad 20 drehbar aufnehmende Radträger 12 ist unterteilt in ein an den Querlenkern 14, 16 angelenktes Führungsteil 22, ein das Rad 20 über ein entsprechendes Radlager (nicht dargestellt) aufnehmendes Trägerteil 24 und in zwei verdrehbar am Führungsteil 22 und am Trägerteil 24 gelagerte Stellzylinder 26, 28, die über eine senkrecht zu einander zugewandten Schrägflächen 30 verlaufende Drehachse 32 verstellbar sind. Ein Verdrehen eines oder beider Stellzylinder 26, 28 bewirkt ein Verkippen des Trägerteils 24 relativ zur Raddrehachse 34 und dementsprechend ein Verstellen der Spur und/oder des Sturzes des Rades 20 der Radaufhängung 10.

Die Radlast ist in bekannter Weise über eine Tragfeder 36 gegenüber dem Aufbau 18 abgestützt. Ein gegebenenfalls innerhalb der Tragfeder 36 angeordneter Teleskop-Stoßdämpfer ist nicht dargestellt. Im Ausführungsbeispiel ist das Rad 20 über eine nur teilweise ersichtliche Gelenkwelle 38 angetrieben, wobei sich die Gelenkwelle 38 durch den Radträger 12 erstreckt und trieblich mit der Radachse verbunden ist.

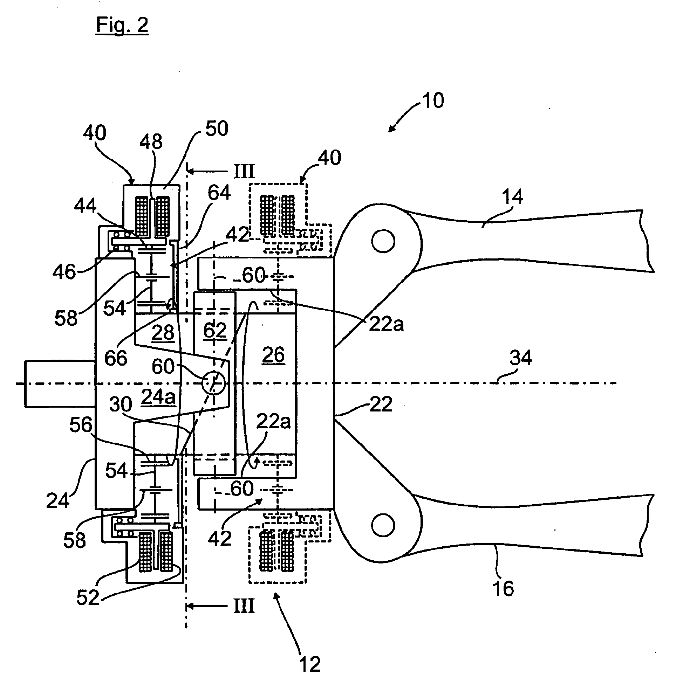

In der **Fig. 2** ist die Betätigung der Stellzylinder 26, 28 zur Spur- und Sturzeinstellung des Rades 20 näher dargestellt.

Dazu ist je Stellzylinder 26, 28 ein elektrischer Scheibenläufermotor 40 vorgesehen, der jeweils auf das Hohlrad 44 eines Planetenradgetriebes 42 abtreibt. Der Scheibenläufermotor 40 mit dem Planetenradgetriebe 42 am Führungsteil 22 ist nur in gestrichelten Linien angedeutet und im wesentlichen spiegelbildlich gleich dem Scheibenläufermotor 40 und dem Planetenradgetriebe 42 am Trägerteil 24 ausgeführt.

Das Hohlrad 44 des Planetenradgetriebes 42 ist über ein doppelreihiges Wälzlager bzw. Kugellager 46 am Trägerteil 24 fliegend drehbar gelagert und weist am Außenumfang einen ringförmigen Scheibenrotor 48 auf, der innerhalb des ringförmigen Gehäuses 50 des Scheibenläufermotors 40 und zwischen im Gehäuse 50 angeordneten Ständerwicklungen 52 positioniert ist.

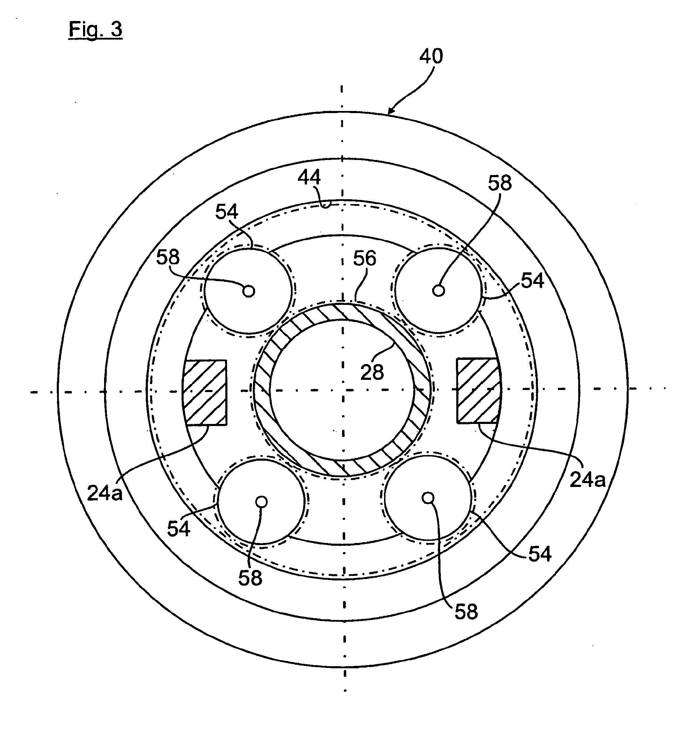

Das innenverzahnte Hohlrad 44 treibt über vier Planetenräder 54 (vgl. auch **Fig. 3**) ein zentrales Sonnenrad 56 an, das am Außenumfang des Stellzylinders 28 befestigt oder angeformt ist. Die Planetenräder 54 sind dabei auf Lagerbolzen 58 drehbar gelagert, die umfangssymmetrisch um das Sonnenrad 56 herum am Trägerteil 24 befestigt sind.

An dem Trägerteil 24 und an dem Führungsteil 22 sind achsparallel und gabelförmig abragende, diametral gegenüberliegende Ausleger 24a, 22a angeformt, an denen über allgemein mit 60 bezeichnete Lagerbolzen ein Stützring 62 kardanisch gelagert ist, der zwar eine Spur- und Sturzverstellung des Rades 20 über die Stellzylinder 26, 28 zulässt, der aber als Momentenabstützung dienend eine Relatiwerdrehung zwischen dem Führungsteil 22 und dem Trägerteil 24 ausschließt.

Wie die **Fig. 3** zeigt, sind die Planetenräder 54 jeweils zwischen den Auslegern 24a des Trägerteiles 24 am Trägerteil 24 angeordnet und mit dem äußeren Hohlrad 44 und dem inneren Sonnenrad 56 trieblich verbunden. Bei der Anordnung am Führungsteil 22 ist sich die Anordnung der Planetenräder 54 um 90° verdreht vorzustellen, da die Ausleger 22a ebenfalls 90° versetzt zu den Auslegern 24a ausgerichtet sind.

Über die Scheibenläufermotore 40 und die Planetenradgetriebe 42 können die Stellzylinder 26, 28 zur Verstellung des Sturzes und/oder der Spur des Rades 20 in beiden Drehrichtungen gleichsinnig oder gegensinnig verstellt werden.

An den Scheibenläufermotoren 40 können ferner in nicht dargestellter Weise elektromagnetische Bremsen vorgesehen sein, die zum Beispiel auf den Scheibenrotor 48 wirkend diesen im unbestromten Zustand federbelastet festbremsen und bei einer Ansteuerung der Scheibenläufermotoren ebenfalls aktiviert werden und den Scheibenrotor 48 freigeben. Damit ist sichergestellt, dass zum Beispiel bei ruhendem Fahrzeug oder bei nicht aktivierten Scheibenläufermotoren eine durch Radlasten bewirkte, unbeabsichtigte Verstellung der Stellzylinder 26, 28 erfolgen kann.

Zwischen den ringförmigen Gehäusen 50 der Scheibenläufermotore 40 und den Stellzylindern 26, 28 sind ringförmige Abdeckkappen 64 eingesetzt, die die Planetenradgetriebe 42 nach außen abdecken. Die Abdeckkappen 64 können gegebenenfalls aus Montagegründen auch mehrteilig ausgeführt sein. Zwischen der zentralen Öffnung der Abdeckkappen 64 und den Stellzylindern 26, 28 ist jeweils ein die Verdrehung der Stellzylinder 26, 28 zulassender Dichtring 66 eingesetzt.

Die Erfindung ist nicht auf das gezeigte Ausführungsbeispiel beschränkt. Das Planetenradgetriebe 42 kann gegebenenfalls auch ein außenverzahntes Hohlrad aufweisen, das mittels eines herkömmlichen Elektromotors über eine Antriebswelle und ein Antriebsritzel angetrieben ist. Die besagte Bremse zur Abstützung von Reaktionsmomenten könnte dann im Elektromotor oder an der Antriebswelle vorgesehen sein.

Anstelle von vier Planetenrädern 54 können gegebenenfalls auch nur zwei Planetenräder verwendet sein, die zwar bei verringerten Zahneingriffen aber symmetrischer Antriebsmomentenverteilung mit dem Hohlrad 44 und dem Sonnenrad 56 kämmen.

## Patentansprüche

1. Vorrichtung zum Verstellen von Sturz und/oder Spur der Räder (20) von Radaufhängungen (10), insbesondere für Kraftfahrzeuge, mit einem Radträger (12), an dem das jeweilige Rad (20) drehbar gelagert ist und der unterteilt ist in ein das Rad aufnehmendes Trägerteil (24), ein mit der Radaufhängung (10) verbundenes Führungsteil (22) und in zwei dazwischen angeordnete und zueinander, sowie zum Trägerteil (24) und zum Führungsteil (22) um eine gemeinsame, senkrecht zu einander zugewandten Schrägflächen (30) verlaufende Drehachse (32) verdrehbare Drehteile (26, 28), die jeweils über einen Antrieb (40) und einen Stelltrieb (42) in beiden Drehrichtungen verstellbar sind, **dadurch gekennzeichnet, dass** der Stelltrieb (42) für zumindest eines der Drehteile (26, 28) als Planetenradgetriebe (42) ausgeführt ist und das Planetenradgetriebe (42) insbesondere radial außerhalb um das Drehteil (26, 28) angeordnet ist.

2. Vorrichtung nach Anspruch 1, **dadurch gekennzeichnet, dass** ein Hohlrad (44) des Planetengetriebes (42) unmittelbar über einen elektrischen Scheibenläufermotor (40) angetrieben ist, dessen Scheibenrotor (48) insbesondere am Außenumfang des Hohlrades (44) und dessen Ständerwicklungen (52) insbesondere am Trägerteil (24) und/oder Führungsteil (22) befestigt sind.

3. Vorrichtung nach Anspruch 1 oder 2, **dadurch gekennzeichnet, dass** das Sonnenrad (56) des Planetenradgetriebes (42) drehfest mit dem Drehteil (26, 28) verbunden ist.

4. Vorrichtung nach Anspruch 1, 2 oder 3, **dadurch gekennzeichnet, dass** das angetriebene Hohlrad (44) des Planetenradgetriebes (42) drehbar am Trägerteil (24) und/oder am Führungsteil (22) gelagert ist, und/oder dass die innenliegenden Planetenräder (54) auf Lagerbolzen (58) des Trägerteiles (24) und/oder des Führungsteiles (22) gelagert sind, und/oder dass die Planetenräder (54) mit dem Hohlrad (44) und dem auf dem Drehteil (26, 28) angeordneten Sonnenrad (56) in Eingriff sind.

5. Vorrichtung nach Anspruch 3, **dadurch gekennzeichnet, dass** das Hohlrad (44) über ein zweireihiges Wälzlager (46) fliegend am Trägerteil (24) und/oder am Führungsteil (22) gelagert ist.

6. Vorrichtung nach einem der vorherigen Ansprüche, **dadurch gekennzeichnet, dass** an dem Trägerteil (24) und an dem Führungsteil (22) jeweils zwei achsparallel abragende und diametral gegenüberliegende Ausleger (24a, 22a) vorgesehen sind, an denen ein kardanisch angelenkter Stützring (62) gelagert ist, und dass insbesondere die Planetenräder (54) jeweils zwischen den Auslegern (24a, 22a) angeordnet sind.

7. Vorrichtung nach Anspruch 6, **dadurch gekennzeichnet, dass** jeweils vier Planetenräder (54) umfangssymmetrisch verteilt zwischen den Auslegern (24a, 22a) angeordnet sind.

8. Vorrichtung nach einem der Ansprüche 5, 6 oder 7, **dadurch gekennzeichnet, dass** an dem Scheibenrotor (48) zwischen den Ständerwicklungen (52) eine elektromagnetische Bremse vorgesehen ist, die im stromlosen Zustand den Scheibenrotor (48) festbremst und die bei einer elektrischen Ansteuerung des Scheibenläufermotors (40) geöffnet ist.

9. Vorrichtung nach einem der vorhergehenden Ansprüche, **dadurch gekennzeichnet, dass** insbesondere zwischen dem Scheibenläufermotor (40) und den korrespondierenden Drehteilen (26, 28) eine das Planetenradgetriebe (42) kapselnde Abdeckkappe (64) vorgesehen ist.

10. Vorrichtung nach Anspruch 9, **dadurch gekennzeichnet, dass** die Abdeckkappe (64) jeweils am Gehäuse (50) des Scheibenläufermotors (40) festgelegt ist und einen zentralen Dichtring (66) trägt, der den jeweiligen Stellzylinder (26, 28) abdichtend umschließt.

## Claims

1. Device for adjusting camber and/or toe-in of the wheels (20) of wheel suspensions (10), more particularly for motor vehicles, comprising a wheel carrier (12), on which the respective wheel (20) is rotatably mounted, said wheel carrier being subdivided into a carrier part (24) receiving the wheel, a guide part (22) connected to the wheel suspension (10), and two rotating parts (26, 28) which are arranged therebetween and are rotatable relative to one another as well as to the carrier part (24) and to the guide part (22) about a common axis of rotation (32) extending perpendicular to sloped faces (30) which face each other, which rotating parts can each be adjusted in both directions of rotation via a drive (40) and an actuator (42), **characterised in that** the actuator (42) for at least one of the rotating parts (26, 28) is configured as a planetary gear train (42), and said planetary gear train (42) is arranged more particularly radially outside around the rotating part (26, 28).

2. Device according to claim 1, **characterised in that** a ring gear (44) of the planetary gear train (42) is driven directly by means of an electric disc motor (40), the disc rotor (48) of which is fixed more particularly to the outer circumference of the ring gear (44) and the stator windings (52) of which are fixed more particularly to the carrier part (24) and/or guide part (22).

3. Device according to either claim 1 or claim 2, **characterised in that** the sun wheel (56) of the planetary gear train (42) is rotationally engaged with the rotating part (26, 28).

4. Device according to claim 1, 2 or 3, **characterised in that** the driven ring gear (44) of the planetary gear train (42) is rotatably mounted on the carrier part (24) and/or on the guide part (22), and/or **in that** the internal planetary gears (54) are mounted on bearing pins (58) of the carrier part (24) and/or of the guide part (22), and/or **in that** the planetary gears (54) are engaged with the ring gear (44) and the sun wheel (56) which is arranged on the rotating part (26, 28).

5. Device according to claim 3, **characterised in that** the ring gear (44) is mounted in a floating manner on the carrier part (24) and/or on the carrier part (22) via a double-row roller bearing (46).

6. Device according to any of the preceding claims, **characterised in that** two extension arms (24a, 22a), which project parallel to the axis and are diametrically opposed, are provided on the carrier part (24) and on the guide part (22) respectively, on which arms a support ring (62) articulated by cardan joints is mounted, and **in that** more particularly the planetary gears (54) are each arranged between the extension arms (24a, 22a).

7. Device according to claim 6, **characterised in that** four planetary gears (54) are arranged between the extension arms (24a, 22a) so as to be distributed symmetrically over the circumference.

8. Device according to claim 5, 6 or 7, **characterised in that** an electromagnetic brake is provided between the stator windings (52) on the disc rotor (48), which brake locks the disc rotor (48) when not supplied with power and which is open when the disc motor (40) is electrically actuated.

9. Device according to any of the preceding claims, **characterised in that** a cover cap (64), which encapsulates the planetary gear train (42), is more particularly provided between the disc motor (40) and the corresponding rotating parts (26, 28).

10. Device according to claim 9, **characterised in that** the cover cap (64) is respectively fixed to the housing (50) of the disc motor (40) and supports a central sealing ring (66), which surrounds the respective actuating cylinders (26, 28) in a sealing manner.

## Revendications

1. Dispositif de réglage du carrossage et/ou de l'écartement des roues (20) de suspensions de roues (10), en particulier pour véhicules automobiles, comprenant un support de roue (12), sur lequel est montée à rotation la roue respective (20) et qui est divisé en une partie de support (24) recevant la roue, une partie de guidage (22) reliée à la suspension de roue (10) et deux parties rotatives (26, 28) agencées entre elles et pouvant tourner autour d'un axe de rotation commun (32) s'étendant perpendiculairement à des faces obliques (30) tournées l'une vers l'autre, l'une vis-à-vis de l'autre ainsi que par rapport à la partie de support (24) et à la partie de guidage (22), lesquelles parties rotatives peuvent être déplacées dans les deux sens de rotation respectivement via une commande (40) et un organe de réglage (42), **caractérisé en ce que** l'organe de réglage (42) se présente pour au moins l'une des parties rotatives (26, 28) sous la forme d'un engrenage planétaire (42) et l'engrenage planétaire (42) est aménagé autour de la partie rotative (26, 28), en particulier radialement à l'extérieur.

2. Dispositif de réglage selon la revendication 1, **caractérisé en ce qu'**une roue à denture intérieure (44) de l'engrenage planétaire (42) est entraînée directement via un moteur à rotor à disque (40), dont le rotor à disque (48) est fixé en particulier sur la périphérie externe de la roue à denture intérieure (44) et dont les enroulements statoriques (52) sont fixés en particulier sur la partie de support (24) et/ou sur la partie de guidage (22).

3. Dispositif de réglage selon la revendication 1 ou la revendication 2, **caractérisé en ce que** la roue solaire (56) de l'engrenage planétaire (42) est reliée à la partie rotative (26, 28) solidaire en rotation.

4. Dispositif de réglage selon la revendication 1, 2 ou 3, **caractérisé en ce que** la roue à denture intérieure entraînée (44) de l'engrenage planétaire (42) est montée à rotation sur la partie de support (24) et/ou sur la partie de guidage (22) et/ou **en ce que** les roues planétaires intérieures (54) sont montées sur des axes de palier (58) de la partie de support (24) et/ou de la partie de guidage (22), et/ou les roues planétaires (54) sont en prise avec la roue à denture intérieure (44) et la roue solaire (56) agencée sur la partie rotative (26, 28).

5. Dispositif de réglage selon la revendication 3, **caractérisé en ce que** la roue à denture intérieure (44) est montée sur la partie de support (24) et/ou la partie de guidage (22) en porte-à-faux sur un palier de roulement (46) à deux rangées.

6. Dispositif selon l'une quelconque des revendications précédentes, **caractérisé en ce qu'**il est prévu sur la partie de support (24) et sur la partie de guidage (22) respectivement deux bras (24a, 22a) saillants à axes parallèles et diamétralement opposés, sur lesquels est montée une bague d'appui (62) articulée à la Cardan et **en ce que**, en particulier, les roues planétaires (54) sont agencées respectivement entre les bras (24a, 22a).

7. Dispositif selon la revendication 6, **caractérisé en ce que** respectivement quatre roues planétaires (54) sont agencés symétriquement distribués sur la périphérie entre les bras (24a, 22a).

8. Dispositif selon l'une quelconque des revendications 5, 6 ou 7, **caractérisé en ce qu'**il est prévu sur le rotor à disque (48) entre les enroulements statoriques (52) un frein électromagnétique qui bloque le rotor à disque (48) à l'état hors tension et qui est ouvert lors d'une commande électrique du moteur à rotor à disque (40).

9. Dispositif selon l'une quelconque des revendications précédentes, **caractérisé en ce qu'**il est prévu en particulier entre le moteur à rotor à disque (40) et les parties rotatives correspondantes (26, 28) une coiffe de recouvrement (64) encapsulant l'engrenage planétaire (42).

10. Dispositif selon la revendication 9, **caractérisé en ce que** la coiffe de recouvrement (64) est fixée respectivement sur le boîtier (50) du moteur à rotor à disque (40) et porte une bague d'étanchéité centrale (66) qui enserre de manière étanche le cylindre de réglage respectif (26, 28).
